# EUROPEAN PATENT SPECIFICATION

(11) **EP 1 509 934 B1**
(45) Date of publication and mention of the grant of the patent: **18.01.2006**
(21) Application number: 03733617.9
(22) Date of filing: 21.05.2003
(51) Int. Cl.: H01G 9/20

(54) **METHOD AND APPARATUS FOR FILLING A DYE SENSITIZED SOLAR CELL WITH ELECTROLYTE**
VERFAHREN UND VORRICHTUNG ZUM FÜLLEN EINER FARBSTOFFSENSIBILISIERTEN SOLARZELLE MIT ELEKTROLYT
PROCEDE ET APPAREIL POUR REMPLIR D'UN ELECTROLYTE UNE CELLULE SOLAIRE SENSIBLE AU COLORANT

(30) Priority: 04.06.2002 NL 1020750
(43) Date of publication of application: 02.03.2005
(73) Proprietor: Stichting Energieonderzoek Centrum Nederland, 1755 ZG Petten (NL)
(72) Inventor: MAHIEU, Danny, Roberto, NL-1782 NM Den Helder (NL); VAN DER BURG, Nicolaas, Petrus, Gijsbertus, NL-1991 EN Velserbroek (NL)
(74) Representative: Dokter, Hendrik Daniel
(86) International application number: PCT/NL2003/000374
(87) International publication number: WO 2003/102984

(56) References cited:
- WO-A-00/48212
- WO-A-00/62315
- US-A1- 2001 004 901

## Description

The invention relates to a method for filling with liquid a semi-manufactured product for a liquid-containing photovoltaic element, which semi-manufactured product comprises at least one plate-like work electrode and a plate-like counter-electrode adhered thereto by means of a vapour and liquid-tight peripheral edge, wherein between the work electrode, the counter-electrode and the peripheral edge a space is provided for receiving a liquid.

A liquid-containing photovoltaic element is known from the American patent no. 5,350,644. The known photovoltaic element comprises a work electrode which is formed by a layered structure of at least a first electrically conductive layer, which is for instance deposited on a first substrate, or even forms a first substrate, a layer of crystalline metal oxide semiconductor material deposited on the first electrically conductive layer, a counter-electrode which is formed by a transparent second electrically conductive layer deposited on a transparent second substrate, and an electrolytic liquid held between the layer of semiconductor material and the second electrically conductive layer. In practical situations use is usually made of a glass plate for the first and second substrate.

During manufacture of a liquid-containing photovoltaic element it has to be filled with the electrolytic liquid, which has slightly viscous properties. The filling takes place after the first and second substrate with the respective layers deposited thereon are adhered to each other by means of a vapour and liquid-tight peripheral edge of a thermoplastic adhesive material, wherein between the two substrates and the peripheral edge a space is created for receiving the liquid.

The filling takes place according to the prior art by arranging two holes in one of the substrates, injecting electrolytic liquid into the space through a first hole and allowing air to escape through the second hole, until the space is completely filled, and subsequently sealing both holes. The arranging of two holes in one of the substrates is mechanically undesirable, and moreover has an adverse effect on the cost-price of the photovoltaic element.

From the American patent application no. US 2001/004901, there is known a method of filling whith a liquid electrolyte a semi-manufactured product for a liquid-containing photovoltaic element. The semi-manufactured product comprises a plate-like work electrode and a counter electrode adhered thereto by means of a vapour and liquid-tight peripheral edge. The space thus formed is filled by providing an inlet and an outlet opening, and injecting the electrolyte by a pump via a glass tube which is closed when the filling is complete.

According to an alternative known method, a hole is arranged in one of the substrates, whereafter the element to be filled is placed, with the substrate provided with the hole directed upward, in a vacuum chamber to be vacuum-pumped. A holder open on its underside, to be filled with electrolytic liquid, is then placed on the substrate around the hole, the vacuum chamber is vacuum-pumped wherein the space between the substrates is likewise vacuum-pumped, and air is finally admitted into the vacuum chamber, wherein electrolytic liquid is pressed out of the holder via the hole into the space between the substrates. This method is time-consuming and, due to the inherent use of an expensive vacuum pump which is exposed to oxidizing constituents in the electrolytic liquid, has an adverse effect on the cost-price of the photovoltaic element.

It is an object of the invention to provide a method for filling a semi-manufactured product for a photovoltaic element with an electrolytic liquid, according to which it is possible to suffice with arranging a hole in one of the substrates of the semi-manufactured product for admitting the liquid into the space between the substrates, without herein having to vacuum-pump this space.

It is a further object to provide such a method which enables the manufacture of a semi-manufactured product in rapid and cost-saving manner.

These objectives are achieved with a method of the type stated in the preamble which according to the invention comprise the steps of (iii) placing the semi-manufactured product with the filling opening directed upward on a horizontally placed rotatable disc in a manner such that the filling opening extends round the rotation axis of the disc within a circle of a predetermined radius R, (iv) placing around the filling opening on the semi-manufactured product a holder with a flat underside and provided with an opening, wherein the opening has at least an internal diameter 2R and the outer diameter of the holder on its underside is smaller than the smallest surface area dimension of the semi-manufactured product, (v) introducing liquid into the holder and causing rotation of the disc with the semi-manufactured product and the holder placed thereon at a rotation speed and for a period such that the space in the semi-manufactured product is completely filled with liquid under the influence of centrifugal forces and the gravitational force acting on the liquid, and (vi) sealing the filling opening.

In order to enhance a good mechanical contact between the underside of the holder for placing in step (iv) and the semi-manufactured product, according to an embodiment of the method the holder is placed under pre-pressure on the semi-manufactured product.

In an advantageous embodiment a liquid-tight seal is provided between the underside of the holder and the semi-manufactured product during placing of the holder in step (iv), so that no liquid can leak out of the holder under the influence of a centrifugal force between the underside of the holder and the semi-manufactured product.

The rotation speed in step (v) of a method according to the invention amounts to for instance at least 2000 rpm (revolutions per minute), and preferably amounts to at least 4000 rpm. At this latter rotation speed, filling of the semi-manufactured product is on the one hand completed in a sufficiently short period of time, while on the other the centrifugal forces occurring on the constituent parts of the semi-manufactured product are not so great that these forces can result in damage to the semi-manufactured product.

In another embodiment of a method according to the invention, a pulsating underpressure is applied in the holder during introducing of the liquid into the holder during step (v). It has been found that by applying a pulsating underpressure in the holder the flow rate of the liquid through the filling opening is increased compared to the flow rate in the absence of this pulsating underpressure, under otherwise identical conditions. In an advantageous embodiment the underpressure to be applied amounts to about 10 kPa.

The method according to the invention is particularly suitable for filling a semi-manufactured product which comprises at least one glass substrate.

The invention further relates to an apparatus for performing the above-described invented method, which apparatus comprises a rotatable disc which in the operating situation is placed horizontally for placing thereon of a semi-manufactured product, said product having a filling opening directed upward, said apparatus further comprising a rotatable liquid holder which can be placed around the filling opening on the semi-manufactured product and which is flat on its underside and provided with an opening, wherein the outer diameter of the holder on its underside is smaller than the smallest surface area dimension of the semi-manufactured product, such that the outer diameter of the holder does not extend outside the surface area of the semi-manufactured product, and the filling opening falls wholly within the opening of the holder.

In one embodiment the holder is symmetrical about an axis of symmetry and the holder can be placed in a manner such that the axis of symmetry coincides with the axis of rotation of the disc.

A symmetrical holder has the advantage that it is in balance during the rotation and does not cause any vibrations in the underlying semi-manufactured product.

The holder has for example 2-fold, 4-fold or 6-fold symmetry, i.e. when rotated through an angle of respectively 2π/2, 2π/4 or 2π/6 the holder is carried over into itself.

The holder is preferably rotation-symmetrical. In a holder of an embodiment of an apparatus according to the invention, the interior of the holder has in a longitudinal section a downward widening conical progression. Such a conical progression provides the advantage that pushing of the liquid upward along the inner wall in the holder is counteracted as a result of centrifugal forces.

In another embodiment of an apparatus according to the invention, the holder is provided with spring means for placing the holder under pre-pressure on the semi-manufactured product, thereby enhancing a good mechanical contact between the underside of the holder and the semi-manufactured product.

In an advantageous embodiment the holder is provided on its underside with sealing means for providing a liquid-tight seal between the underside of the holder and a semi-manufactured product.

The invention will be elucidated hereinbelow on the basis of an embodiment of an apparatus, with reference to the drawings.

In the drawings
Fig. 1 shows a schematic vertical section of a semi-manufactured product for a liquid-containing solar cell on which a cone-shaped holder is placed, and
Fig. 2 shows a simplified vertical section of an embodiment of a component with a rotatable liquid holder of an apparatus for filling a semi-manufactured product for a solar cell.

Corresponding parts are designated in the drawings with the same reference numerals.

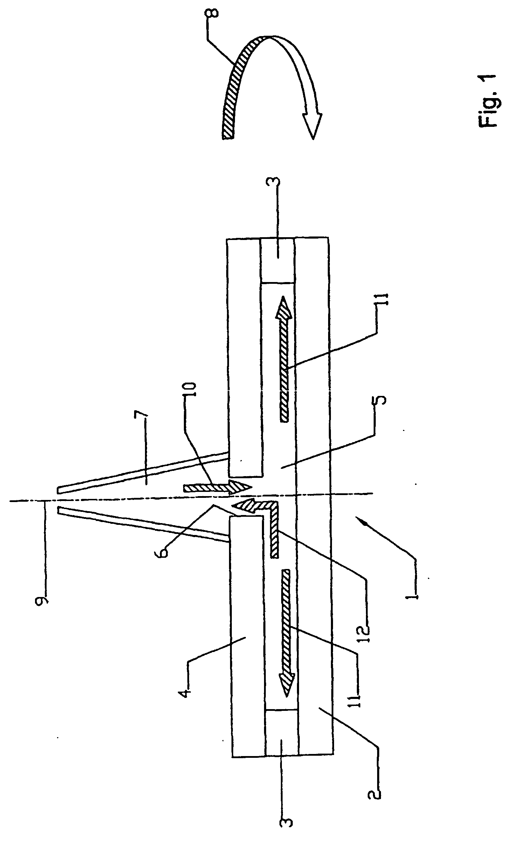

Fig.1 shows a semi-manufactured product 1 for a liquid-containing solar cell, with a plate-like work electrode 2, and a plate-like counter-electrode 4 adhered thereto by means of a vapour and liquid-tight peripheral edge 3, wherein work electrode 2, counter-electrode 4 and peripheral edge 3 enclose a space 5 for receiving a liquid therein, and a filling opening 6 is arranged in counter-electrode 4. On counter-electrode 4 there is placed around filling opening 6 a downward widening, conical holder 7 open on its underside, wherein the dimensions are chosen such that the outer diameter of holder 7 does not extend outside the surface area of work electrode 4, and filling opening 6 falls wholly within the opening of holder 7. When the space 5 is filled according to the invention with an electrolytic liquid, the semi-manufactured product 1 and holder 7 are simultaneously rotated as according to arrow 8 about a vertical rotation axis 9, wherein the liquid is admitted into holder 7 and semi-manufactured product 1, wherein under the influence of the centrifugal force in radial direction as according to arrows 11 the liquid is driven into space 5 while simultaneously displacing air which is present, which escapes through filling opening 6 (as shown by arrow 12).

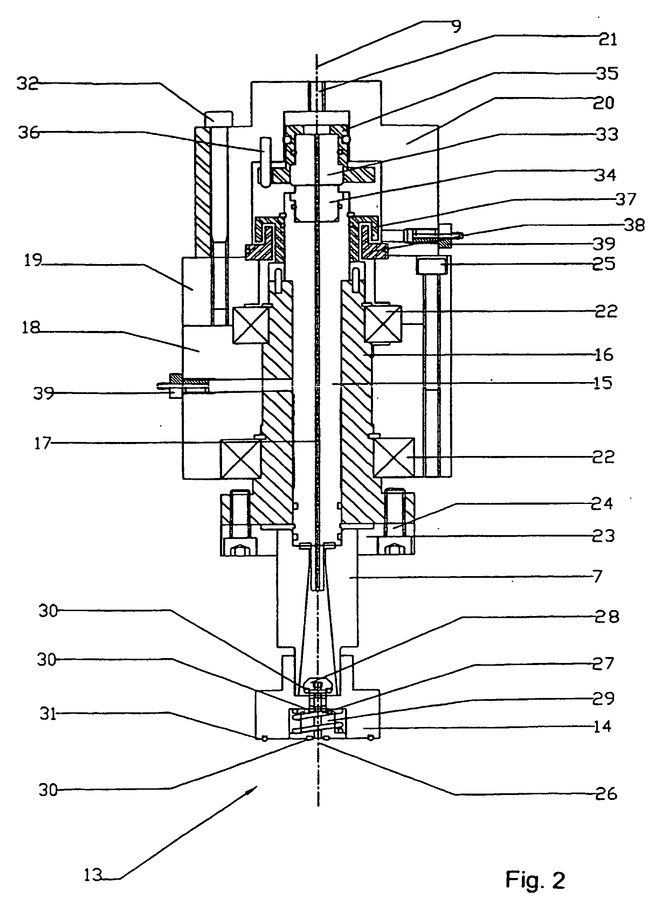

Fig. 2 shows a filler head 13 of an apparatus for filling a semi-manufactured product for a solar cell, which filler head 13 is assembled from a static and a rotatable part. The rotatable part comprises inter alia a rotation-symmetrical, conical liquid holder 7 widening downward internally, with foot 14, an insert 15 suspended in an insert holder 16 and provided with a continuous axial hole 17 which debouches into liquid holder 7. The static part comprises inter alia a housing, assembled from parts 18, 19 which are fixed to each other with a bolt 25, closed by an upper cap 20 which is fixed with a bolt 32 to housing 19 and which is provided with a liquid inlet opening 21. The static part is provided with an upper static seal 33 which is enclosed in a stator 35 and co-acts with a lower rotatable seal 34. The insert holder 16 is mounted with bearings 22 on housing 18, 19, the liquid holder 7 is fastened to insert holder 16 by means of a mounting flange 23 and bolts 24. In foot 14 is formed an outlet opening 26 which is closed by a valve 29 enclosed under pre-pressure of a pressure spring 27 and provided on its upper side with a locking nut 28. Foot 14 is provided with a number of seals 30 and a carrier ring 31 of a suitable material, for example rubber. In a filling apparatus according to the invention the filler head 13 is displaceable in vertical direction above a horizontally disposed rotatable disc or turntable (not shown) in a manner such that the rotation axis 9 of liquid holder 7 and that of the turntable coincide. For filling purposes a semi-manufactured product 1 is laid on the turntable, wherein care is taken that the filling opening 6 in semi-manufactured product 1 extends round the rotating centre of the turntable. Filler head 13 is then lowered onto semi-manufactured product 1, wherein valve 29 and closing spring 27 are pressed in, and liquid which is supplied via liquid inlet 21 and shaft hole 17, after setting into rotation the turntable, semi-manufactured product 1 and rotatable parts of the filler head, is admitted from liquid holder 7 via outlet opening 26 and filling opening 6 into the space 5 in semi-manufactured product 1 where the liquid spreads in the manner set forth above in the description of figure 1. The rotatable parts of the filler head are set into rotation by the semi-manufactured product 1 rotating with the turntable by means of the rubber carrier ring 31 in filler head 14. A stator pin 36 locks the stator 35 and the upper seal 33 against rotation. In order to prevent undesirable leakage of liquid to the bearings 22, a rotatable peripheral edge 37 arranged on the upper part of insert 15 and a coacting static peripheral edge 38 of complementary form connected to housing 19 form a labyrinth, and drains 39 are arranged in the upper cap 20 and housing 19.

It will be noted that this method provides the option of simultaneous filling of a plurality of semi-manufactured products if the periphery of these semi-manufactured products is a regular polygon, and the filling openings of these semi-manufactured products are arranged such that they can all be placed in the centre of the turntable.

## Claims

1. Method for filling with liquid a semi-manufactured product (1) for a liquid-containing photovoltaic element, which semi-manufactured product (1) comprises at least one plate-like work electrode (2) and a plate-like counter-electrode (4) adhered thereto by means of a vapour and liquid-tight peripheral edge (3), wherein between the work electrode (2), the counter-electrode (4) and the peripheral edge (3) a space (5) is provided for receiving a liquid, comprising the steps of
(i) providing said semi-manufactured product (1),
(ii) arranging a filling opening (6) as desired in the work electrode (2) or the counter-electrode (4),
**characterized by** the steps of
(iii) placing the semi-manufactured product (1) with the filling opening (6) directed upward on a horizontally placed rotatable disc in a manner such that the filling opening (6) extends round the rotation axis of the disc within a circle of a predetermined radius R,
(iv) placing around the filling opening (6) on the semi-manufactured product a holder (7) with a flat underside (14) and provided with an opening (26), wherein the opening (26) has at least an internal diameter 2R and the outer diameter of the holder (7) on its underside (14) is smaller than the smallest surface area dimension of the semi-manufactured product (1),
(v) introducing liquid into the holder (7) and causing rotation of the disc with the semi-manufactured product (1) and the holder (7) placed thereon at a rotation speed and for a period such that the space (5) in the semi-manufactured product (1) is completely filled with liquid under the influence of centrifugal forces and the gravitational force acting on the liquid, and
(vi) sealing the filling opening (6).

2. Method as claimed in claim 1, **characterized in that** the holder (7) for placing in step (iv) is placed under pre-pressure on the semi-manufactured product.

3. Method as claimed in claims 1-2, **characterized in that** during placing of the holder (7) in step (iv) a liquid-tight seal (30) is provided between the underside (14) of the holder (7) and the semi-manufactured product.

4. Method as claimed in any of the claims 1-3, **characterized in that** the rotation speed in step (v) amounts to at least 2000 rpm (revolutions per minute).

5. Method as claimed in claim 4, **characterized in that** the rotation speed in step (v) amounts to at least 4000 rpm (revolutions per minute).

6. Method as claimed in any of the claims 1-5, **characterized in that** a pulsating underpressure is applied in the holder (7) during introducing of the liquid into the holder (7) in step (v).

7. Method as claimed in claim 6, **characterized in that** the underpressure amounts to about 10 kPa.

8. Method as claimed in any of the claims 1-7, wherein the semi-manufactured product (1) comprises at least one glass substrate.

9. Apparatus for performing the method as claimed in claim 1, comprising a rotatable disc which in the operating situation is placed horizontally for placing thereon of a semi-manufactured product (1), said product having a filling opening (6) directed upward, said apparatus further comprising a rotatable liquid holder (7) which can be placed around the filling opening (6) on the semi-manufactured product (1) and which is flat on its underside (14) and provided with an opening (26), wherein the outer diameter of the holder (7) on its underside (14) is smaller than the smallest surface area dimension of the semi-manufactured product, such that the outer diameter of the holder (7) does not extend outside the surface area of the semi-manufactured product, and the filling opening (6) falls wholly within the opening of the holder (7).

10. Apparatus as claimed in claim 9, **characterized in that** the holder (7) is symmetrical on an axis of symmetry and can be placed on a semi-manufactured product (1) in a manner such that the axis of symmetry coincides with the axis of rotation of the disc.

11. Apparatus as claimed in claim 10, **characterized in that** the holder is rotation-symmetrical.

12. Apparatus as claimed in any of the claims 9-11, **characterized in that** the interior of the holder (7) has in a longitudinal section a downward widening conical progression.

13. Apparatus as claimed in any of the claims 9-12, **characterized in that** the holder (7) is provided with spring means (27) for placing the holder (7) under pre-pressure on the semi-manufactured product.

14. Apparatus as claimed in any of the claims 9-13, **characterized in that** the holder (7) is provided on its underside (14) with sealing means (30) for providing a liquid-tight seal between the underside of the holder (14) and the semi-manufactured product (1).

## Patentansprüche

1. Verfahren zum Füllen eines Halbfabrikats (1) für ein flüssigkeitshaltiges photovoltaisches Element mit Flüssigkeit, und dieses Halbfabrikat (1) umfasst zumindest eine plattenförmige Arbeitselektrode (2) und eine mit Hilfe von einem dampf- und flüssigkeitsdichten Umfangsrand (3) daran geheftete, plattenförmige Gegenelektrode (4), wobei zwischen der Arbeitselektrode (2), der Gegenelektrode (4) und dem Umfangsrand (3) ein Raum (5) zur Aufnahme einer Flüssigkeit verschafft ist, und dieses Verfahren umfasst die Schritte:
(i) das Verschaffen besagten Halbfabrikats (1),
(ii) das Anbringen einer Füllöffnung (6), je nach Wunsch in der Arbeitselektrode (2) oder in der Gegenelektrode (4), **gekennzeichnet durch** die Schritte:
(iii) das Legen des Halbfabrikats (1), mit der Füllöffnung (6) nach oben gerichtet, auf eine horizontal angebrachte, rotierbare Scheibe, auf solche Weise, dass die Füllöffnung (6) sich innerhalb eines Kreises mit einem vorher bestimmten Radius R um die Rotationsachse der Scheibe erstreckt,
(iv) das um die Füllöffnung (6) auf dem Halbfabrikat Anbringen eines an seiner Unterseite (14) flachen und mit einer Öffnung (26) versehenen Behälters (7), wobei die Öffnung (26) zumindest einen Innendurchmesser 2R hat und der Außendurchmesser des Behälters (7) an seiner Unterseite (14) kleiner als die kleinste Oberflächendimension des Halbfabrikats (1) ist,
(v) das Zuführen von Flüssigkeit in den Behälter (7) und das in Rotation Versetzen der Scheibe mit dem darauf gelegten Halbfabrikat (1) und dem darauf angebrachten Behälter (7) mit einer solchen Rotationsgeschwindigkeit und während eines solchen Zeitabschnitts, dass der Raum (5) in dem Halbfabrikat (1) unter Einfluss der auf die Flüssigkeit einwirkenden Zentrifugalkräfte und der Schwerkraft völlig mit Flüssigkeit gefüllt wird, und
(vi) das Dichten der Füllöffnung (6).

2. Verfahren nach Anspruch 1, **dadurch gekennzeichnet, dass** der in Schritt (iv) anzubringende Behälter (7) unter Druck auf dem Halbfabrikat angebracht wird.

3. Verfahren nach Ansprüchen 1-2, **dadurch gekennzeichnet, dass** während des Anbringens des Behälters (7) in Schritt (iv) eine flüssigkeitsdichte Dichtung (30) zwischen der Unterseite (14) des Behälters (7) und dem Halbfabrikat verschafft wird.

4. Verfahren nach einem der Ansprüche 1-3, **dadurch gekennzeichnet, dass** die Rotationsgeschwindigkeit in Schritt (v) zumindest 2000 rpm (Umdrehungen pro Minute) beträgt.

5. Verfahren nach Anspruch 4, **dadurch gekennzeichnet, dass** die Rotationsgeschwindigkeit in Schritt (v) zumindest 4000 rpm (Umdrehungen pro Minute) beträgt.

6. Verfahren nach einem der Ansprüche 1-5, **dadurch gekennzeichnet, dass** während des Zuführens der Flüssigkeit in den Behälter (7) in Schritt (v) in dem Behälter (7) ein pulsierender Unterdruck angewendet wird.

7. Verfahren nach Anspruch 6, **dadurch gekennzeichnet, dass** der Unterdruck etwa 10 kPa beträgt.

8. Verfahren nach einem der Ansprüche 1-7, wobei das Halbfabrikat (1) zumindest ein Glassubstrat umfasst.

9. Vorrichtung zur Durchführung des Verfahrens nach Anspruch 1, die eine in Betriebszustand horizontal angebrachte, rotierbare Scheibe umfasst, um darauf ein Halbfabrikat (1) zu legen, und besagtes Halbfabrikat hat eine nach oben gerichtete Füllöffnung (6), und besagte Vorrichtung umfasst weiter einen rotierbaren Flüssigkeitsbehälter (7), der um die Füllöffnung (6) auf dem Halbfabrikat (1) angebracht werden kann und der an seiner Unterseite (14) flach ist und mit einer Öffnung (26) versehen ist, wobei der Außendurchmesser des Behälters (7) an seiner Unterseite (14) kleiner als die kleinste Oberflächendimension des Halbfabrikats ist, auf solche Weise, dass der Außendurchmesser des Behälters (7) sich nicht außerhalb der Oberfläche des Halbfabrikats erstreckt, und die Füllöffnung (6) völlig innerhalb der Öffnung des Behälters (7) fällt.

10. Vorrichtung nach Anspruch 9, **dadurch gekennzeichnet, dass** der Behälter (7) um eine Symmetrieachse symmetrisch ist und auf solche Weise auf einem Halbfabrikat (1) angebracht werden kann, dass die Symmetrieachse mit der Rotationsachse der Scheibe zusammenfällt.

11. Vorrichtung nach Anspruch 10, **dadurch gekennzeichnet, dass** der Behälter rotationssymmetrisch ist.

12. Vorrichtung nach einem der Ansprüche 9-11, **dadurch gekennzeichnet, dass** das Innere des Behälters (7) in einem Längsschnitt einen sich nach unten erweiternden, konischen Verlauf hat.

13. Vorrichtung nach einem der Ansprüche 9-12, **dadurch gekennzeichnet, dass** der Behälter (7) mit Federmitteln (27) versehen ist, um den Behälter (7) unter Vordruck auf dem Halbfabrikat anzubringen.

14. Vorrichtung nach einem der Ansprüche 9-13, **dadurch gekennzeichnet, dass** der Behälter (7) an seiner Unterseite (14) mit Dichtungsmitteln (30) versehen ist, um eine flüssigkeitsfeste Dichtung zwischen der Unterseite des Behälters (14) und dem Halbfabrikat (1) zu verschaffen.

## Revendications

1. Procédé pour remplir d'un liquide un produit semi-fini (1) pour un élément photovoltaïque contenant un liquide, ledit produit semi-fini (1) comprenant au moins une électrode de travail en forme de plaque (2) et une contre-électrode en forme de plaque (4) adhérant à celle-ci par l'intermédiaire d'un bord périphérique étanche à la vapeur et au liquide (3), dans lequel un espace est prévu entre l'électrode de travail (2), la contre-électrode (4) et le bord périphérique (3) pour recevoir un liquide, comprenant les étapes consistant à:
(i) fournir ledit produit semi-fini (1);
(ii) ménager une ouverture de remplissage (6) dans l'électrode de travail (2) ou dans la contre-électrode (4), comme on le souhaite;
**caractérisé par** les étapes consistant à:
(iii)placer le produit semi-fini (1) avec l'ouverture de remplissage (6) orientée vers le haut sur un disque rotatif placé horizontalement d'une manière telle que l'ouverture de remplissage (6) s'étende autour de l'axe de rotation du disque à l'intérieur d'un cercle présentant un rayon prédéterminé R;
(iv) placer autour de l'ouverture de remplissage (6), sur le produit semi-fini, un récipient (7) présentant un dessous plat (14) et comportant une ouverture (26), dans lequel l'ouverture (26) présente au moins un diamètre interne 2R, et dans lequel le diamètre extérieur du récipient (7) sur le dessous (14) de celui-ci est plus petit que la plus petite dimension d'aire de surface du produit semi-fini (1);
(v) introduire un liquide dans le récipient (7) et provoquer la rotation du disque avec le produit semi-fini (1) et le récipient (7) placé sur celui-ci à une vitesse de rotation et pendant une période telles que l'espace (5) dans le produit semi-fini (1) soit complètement rempli du liquide sous l'influence des forces centrifuges et de la force gravitationnelle agissant sur le liquide; et
(vi) sceller l'ouverture de remplissage (6).

2. Procédé selon la revendication 1, **caractérisé en ce que** le récipient (7) à placer à l'étape (iv) est placé sous pression sur le produit semi-fini.

3. Procédé selon les revendications 1-2, **caractérisé en ce que** pendant le placement du récipient (7) à l'étape (iv), un joint étanche au fluide (30) est placé entre le dessous (14) du récipient (7) et le produit semi-fini.

4. Procédé selon l'une quelconque des revendications 1 à 3, **caractérisé en ce** la vitesse de rotation à l'étape (v) est égale à au moins 2000 tpm (tours par minute).

5. Procédé selon la revendication 4, **caractérisé en ce que** la vitesse de rotation à l'étape (v) est égale à au moins 4000 tpm (tours par minute).

6. Procédé selon l'une quelconque des revendications 1 à 5, **caractérisé en ce qu'**une sous-pression pulsée est appliquée dans le récipient (7) pendant l'introduction du liquide dans le récipient (7) à l'étape (v).

7. Procédé selon la revendication 6, **caractérisé en ce que** la sous-pression est égale à environ 10 kPa.

8. Procédé selon l'une quelconque des revendications 1 à 7, dans lequel le produit semi-fini (1) comprend au moins un substrat de verre.

9. Appareil pour exécuter le procédé selon la revendication 1, comprenant un disque rotatif qui, dans les conditions de fonctionnement, est placé horizontalement pour placer sur celui-ci un produit semi-fini (1), ledit produit comportant une ouverture de remplissage (6) orientée vers le haut, ledit appareil comprenant en outre un récipient de liquide rotatif (7) pouvant être placé autour de l'ouverture de remplissage (6) sur le produit semi-fini (1), dont le dessous (14) est plat et qui comporte une ouverture (26), dans lequel le diamètre extérieur du récipient (7) sur le dessous (14) de celui-ci est plus petit que la plus petite dimension d'aire de surface du produit semi-fini, de telle sorte que le diamètre extérieur du récipient (7) ne s'étende pas à l'extérieur de l'aire de surface du produit semi-fini, et que l'ouverture de remplissage (6) rentre complètement à l'intérieur de l'ouverture du récipient (7).

10. Appareil selon la revendication 9, **caractérisé en ce que** le récipient (7) est symétrique sur un axe de symétrie et peut être placé sur un produit semi-fini (1) d'une manière telle que l'axe de symétrie coïncide avec l'axe de rotation du disque.

11. Appareil selon la revendication 10, **caractérisé en ce que** le récipient est un récipient à symétrie de rotation.

12. Appareil selon l'une quelconque des revendications 9 à 11, **caractérisé en ce que** l'intérieur du récipient (7) présente dans une section longitudinale une progression conique s'élargissant vers le bas.

13. Appareil selon l'une quelconque des revendications 9 à 12, **caractérisé en ce que** le récipient (7) est équipé de moyens de ressort (27) pour placer le récipient (7) sous une pré-pression sur le produit semi-fini.

14. Appareil selon l'une quelconque des revendications 9 à 13, **caractérisé en ce que** le dessous (14) du récipient (7) comporte des moyens d'étanchéité (30) pour former un joint étanche au fluide entre le dessous (14) du récipient et le produit semi-fini (1).
